(19) Europäisches Patentamt
European Patent Office
Office européen des brevets

(11)  **EP 4 360 222 B1**

(12)  **EUROPEAN PATENT SPECIFICATION**

(45) Date of publication and mention
of the grant of the patent:
**28.01.2026 Bulletin 2026/05**

(51) International Patent Classification (IPC):
**H04B 7/06** (2006.01)          **G06K 7/10** (2006.01)
**H04B 7/08** (2006.01)

(21) Application number: **21737384.4**

(52) Cooperative Patent Classification (CPC):
**H04B 7/0617; G06K 7/10356; H04B 7/06956;**
**H04B 7/088**

(22) Date of filing: **24.06.2021**

(86) International application number:
**PCT/EP2021/067433**

(87) International publication number:
**WO 2022/268331 (29.12.2022 Gazette 2022/52)**

(54) **SIGNAL DETECTION OF A BACKSCATTERING DEVICE**

SIGNALDETEKTION EINER RÜCKSTREUUNGSVORRICHTUNG

DÉTECTION D'UN SIGNAL D'UN DISPOSITIF DE RÉTRODIFFUSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.05.2024 Bulletin 2024/18**

(73) Proprietor: **Telefonaktiebolaget LM Ericsson
(publ)
164 83 Stockholm (SE)**

(72) Inventors:
• **VIEIRA, Joao**
**245 63 Hjärup (SE)**
• **LARSSON, Erik, G.**
**586 63 Linköping (SE)**

(74) Representative: **Ericsson
Patent Development
Torshamnsgatan 21-23
164 80 Stockholm (SE)**

(56) References cited:
**US-A1- 2017 286 730     US-A1- 2019 059 099
US-A1- 2020 343 944**

## Description

The project leading to this application has received funding from the European Union's Horizon 2020 research and innovation programme under grant agreement No 101013425.

## TECHNICAL FIELD

Embodiments presented herein relate to a method, a multiple-input multiple-output reader, a computer program, and a computer program product for detecting a signal communicated by a backscattering device.

## BACKGROUND

In general terms, a backscattering device, sometimes also referred to as a passive (radio) device is a device that is capable of communicating without the need to use an active radiofrequency (RF) frontend. A backscattering device might be without an active RF frontend, but it has an antenna whose reflection coefficient can be varied using, for example, a simple circuit that adjusts the impedance of the load connected to the antenna. By varying this impedance, the backscattering device can affect the properties of the wave that is reflected (backscattered) when the device is illuminated by RF energy. Communication with a backscattering device thus takes place by illuminating it with RF power from a transmitter antenna, and having the backscattering device modulate its antenna impedance according to a pattern that contains the information that the backscattering device wants to transmit. The variations in the reflected (backscattered) wave are then detected by a receiving antenna, and the information sent by the backscattering device is decoded. The infrastructure that communicates with a backscattering device is hereinafter called a reader.

The reception of the backscattered signal at the reader needs to occur simultaneously with the transmission of the waveform from the reader. Hence, either (i) the reader must use the same antenna (or antenna panel) for transmission and reception and operate in full-duplex, or (ii) the reader must have a dedicated antenna (or antenna panel) for transmission and a dedicated antenna (or antenna panel) for reception that is physically distanced from the dedicated antenna (or antenna panel) for transmission . Setup (i) is referred to as mono-static and (ii) is referred to as bi-static.

Utilizing backscattering devices for communication is a promising approach towards realizing a sustainable Internet-of-Things and can be implemented (at the backscattering device side) using, for example, very simple and battery-free electronics. One challenge with utilizing backscattering devices for communication is the limited range of communication. This is because of the path loss multiplication effect. Since the backscattering device does not have an active transmitter, the backscattered signal will suffer from a path loss that equals the product of the path loss from the transmit antenna at the reader to the backscattering device and the path loss back from the backscattering device to the receive antenna at the reader.

One solution to this challenge is to use readers with multiple antennas that can harvest an array gain. This is reminiscent of how a multiple-input multiple-output (MIMO) transmitter/receiver obtains an array gain in coherent, closed-loop communications. A reader capable of MIMO communication will hereinafter be referred to as a MIMO reader. It is known to use MIMO readers in the context of communicating with a backscattering device only for monostatic setups, where the same antenna panel at the MIMO reader is used for both transmission and reception. In turn, this requires the use of full-duplex RF electronics at the MIMO reader. While such full-duplex monostatic setups are theoretically possible to build, devices capable of full-duplex MIMO communications are today very expensive and full-duplex MIMO communications is not yet a mature technology. In contrast, a bi-static MIMO reader setup, that is, a MIMO reader which uses one antenna, or antenna panel, as transmitter and a different antenna, or antenna panel, as receiver (where both antenna panels comprises multiple antennas), could be an option as this would circumvent the need for full-duplex technology.

However, in many propagation scenarios of bi-static setups, there exists very high direct link interference from the transmitting panel to the receiving panel. Direct link interference henceforth means the signal sent by the transmitting panel as received directly at the receiving antenna, or antenna panel, at the MIMO reader, without being backscattered at the backscattering device. In many cases the backscattered signal from the backscattering device would drown in this direct-link interference, and the receiving antenna panel would not be able to discover, or detect, the backscattered signal.

Hence, there is still a need for an improved communication between a MIMO reader and a backscattering device.

US20170286730A1 discloses systems and methods for location estimation and tracking for passive RFID and wireless sensor networks, a process for obtaining location information using an RFID reader system includes transmitting a combined interrogation and ranging signal from a plurality of antennas, where the ranging signal is a pseudorandom signal, receiving a backscattered return signal from an RFID tag and estimating a range to the RFID tag based upon correlation between the ranging signal and the received ranging signal.

US20190059099A1 discloses techniques for full duplex operation of base stations and / or user equipment. The UE is configured to: process control messages that comprise a downlink assignment for the UE and an uplink grant for the UE during a subframe in a frequency band, wherein the downlink assignment indicates a first set of UE subarrays, and wherein the uplink grant indicates a second set of UE subarrays.

US20200343944A1 discloses a method for a distributed antenna - based communication device to perform communication based on inter - panel interference comprising: a step of measuring interference between transmission beams of a transmission panel and reception beams of a reception panel.

## SUMMARY

An object of embodiments herein is to address the above issues and to provide improvements towards efficient communication between a MIMO reader and a backscattering device.

A further object of embodiments herein is to provide efficient communication between a MIMO reader and a backscattering device that does not suffer from the issues noted above, or at least where the above noted issues are mitigated or reduced.

According to a first aspect there is presented a method for detecting a signal communicated by a backscattering device. The method is performed by a MIMO reader that comprises a first antenna panel and a second antenna panel. The method comprises selecting, for the first antenna panel, first spatial filter coefficients with an object to minimize interference from the first antenna panel towards the second antenna panel over a radio propagation channel. The method comprises transmitting, from the first antenna panel and whilst applying the selected first spatial filter coefficients, a first signal. The method comprises receiving, at the second antenna panel, a backscattered signal component of the first signal as backscattered by the backscattering device. The backscattered signal component comprises the signal communicated by the backscattering device. The MIMO reader thereby detects the signal communicated by the backscattering device.

According to a second aspect there is presented a MIMO reader for detecting a signal communicated by a backscattering device. The MIMO reader comprises a first antenna panel and a second antenna panel. The MIMO reader further comprises processing circuitry. The processing circuitry is configured to cause the MIMO reader to select, for the first antenna panel, first spatial filter coefficients with an object to minimize interference from the first antenna panel towards the second antenna panel over a radio propagation channel. The processing circuitry is configured to cause the MIMO reader to transmit, from the first antenna panel and whilst applying the selected first spatial filter coefficients, a first signal. The processing circuitry is configured to cause the MIMO reader to receive, at the second antenna panel, a backscattered signal component of the first signal as backscattered by the backscattering device. The backscattered signal component comprises the signal communicated by the backscattering device. The MIMO reader thereby detects the signal communicated by the backscattering device.

According to a third aspect there is presented a MIMO reader for detecting a signal communicated by a backscattering device. The MIMO reader comprises a first antenna panel and a second antenna panel. The MIMO reader further comprises a select module configured to select, for the first antenna panel, first spatial filter coefficients with an object to minimize interference from the first antenna panel towards the second antenna panel over a radio propagation channel. The MIMO reader further comprises a transmit module configured to transmit, from the first antenna panel and whilst applying the selected first spatial filter coefficients, a first signal. The MIMO reader further comprises a receive module configured to receive, at the second antenna panel, a backscattered signal component of the first signal as backscattered by the backscattering device. The backscattered signal component comprises the signal communicated by the backscattering device. The MIMO reader thereby detects the signal communicated by the backscattering device.

According to a fourth aspect there is presented a computer program for detecting a signal communicated by a backscattering device, the computer program comprising computer program code which, when run on a MIMO reader comprising a first antenna panel and a second antenna panel, causes the MIMO reader 200 to perform a method according to the first aspect.

According to a fifth aspect there is presented a computer program product comprising a computer program according to the fourth aspect and a computer readable storage medium on which the computer program is stored. The computer readable storage medium could be a non-transitory computer readable storage medium.

Advantageously, these aspects provide improvements towards efficient communication between the MIMO reader and the backscattering device.

Advantageously, these aspects do not suffer from the issues noted above.

Advantageously, these aspects enable reception of low-energy signals from backscattering devices, such as passive devices, with very low direct link interference in a bistatic MIMO setup.

Advantageously, these aspects facilitate the use of low-noise amplifiers at the second antenna panel with a smaller dynamic range.

Advantageously, these aspects facilitate improved reliability to detect the presence of (or data from) the backscattering device;

Advantageously, these aspects facilitate simple approaches to detect the presence of (or data from) the backscattering device.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

## BRIEF DESCRIPTION OF THE DRAWINGS

The inventive concept is now described, by way of example, with reference to the accompanying drawings, in which:

Fig. 1 is a schematic diagram illustrating a communication system according to embodiments;

Figs. 2 and 3 are flowcharts of methods according to embodiments;

Fig. 4 is a schematic diagram showing functional units of a MIMO reader according to an embodiment;

Fig. 5 is a schematic diagram showing functional modules of a MIMO reader according to an embodiment; and

Fig. 6 shows one example of a computer program product comprising computer readable storage medium according to an embodiment.

## DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

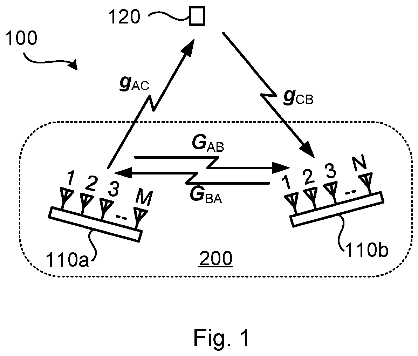

**Fig. 1** is a schematic diagram illustrating a communication system 100 where embodiments presented herein can be applied. The communication system 100 comprises a MIMO reader 200 and a backscattering device 120. In turn, the MIMO reader 200 comprises a first antenna panel 110a and a second antenna panel 110b. The first antenna panel 110a comprises $M$ antennas and the second antenna panel 110b comprises $N$ antennas. The MIMO reader 200, including the first antenna panel 110a and the second antenna panel 110b, defines a bistatic MIMO setup. The backscattering device 120 is assumed to comprise one single antenna. The backscattering device 120 is assumed to be capable of changing the phase of any signal. The backscattering device 120 may or may not comprise an RF chain but is at least capable of adjusting the impedance of a load connected to its antenna, hence changing the signal that is backscattered from it when illuminated by an impinging wave. In Fig. 1 is schematically illustrated four radio propagation channels. The radio propagation channel from the first antenna panel 110a to the second antenna panel 110b is of dimension $N \times M$ and is denoted $\boldsymbol{G}_{AB}$. The radio propagation channel from the second antenna panel 110b to the first antenna panel 110a is of dimension $M \times N$ and is denoted $\boldsymbol{G}_{BA}$. The radio propagation channel from the first antenna panel 110a to the backscattering device 120 is of dimension $1 \times M$ and is denoted $\boldsymbol{g}_{AC}$. The radio propagation channel from the backscattering device 120 to the second antenna panel 110b is of dimension $N \times 1$ and is denoted $\boldsymbol{g}_{CB}$. In some aspects, each radio propagation channel is represented by a corresponding matrix or vector 8depending on the dimensionality of the channel). That is, $\boldsymbol{G}_{AB}$ might be represented by a matrix modelling the complex baseband narrowband radio propagation coefficients from the first antenna panel 110a towards the second antenna panel 110b. Further, $\boldsymbol{G}_{BA}$ might be represented by a matrix modelling the complex baseband narrowband radio propagation coefficients from the second antenna panel 110b towards the first antenna panel 110a. Still further, $\boldsymbol{g}_{AC}$ might be represented by a column vector modelling the complex baseband narrowband radio propagation coefficients from the first antenna panel 110a towards the backscattering device 120. Still further, $\boldsymbol{g}_{CB}$ might be represented by a row vector modelling the complex baseband narrowband radio propagation coefficients from the backscattering device 120 towards the second antenna panel 110b.

As noted above, there is still a need for an improved communication between a MIMO reader 200 and a backscattering device 120.

The embodiments disclosed herein therefore relate to mechanisms that contribute for successful detecting a signal communicated by a backscattering device 120. In order to obtain such mechanisms there is provided a MIMO reader 200, a method performed by the MIMO reader 200, a computer program product comprising code, for example in the form of a computer program, that when run on a MIMO reader 200, causes the MIMO reader 200 to perform the method.

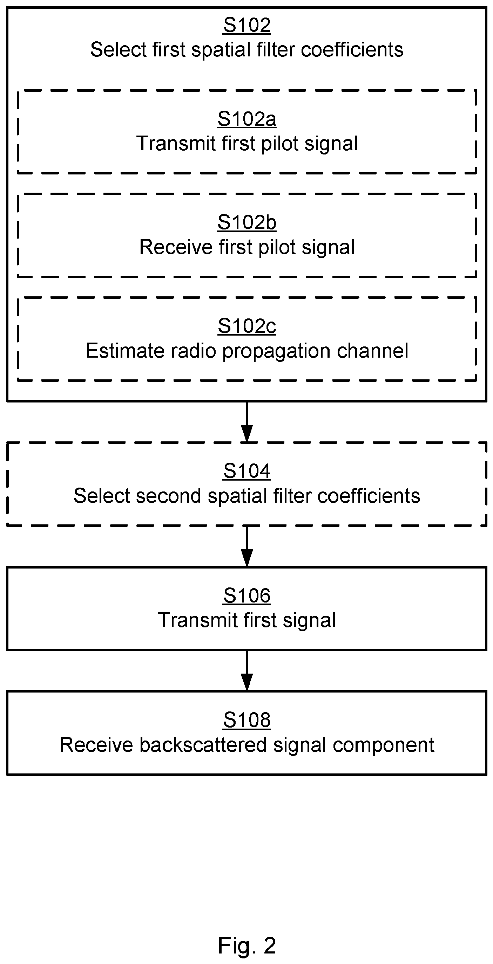

**Fig. 2** is a flowchart illustrating embodiments of methods for detecting a signal communicated by a backscattering device 120. The methods are performed by the MIMO reader 200. As disclosed above, the MIMO reader 200 comprises a first antenna panel 110a and a second antenna panel 110b. The methods are advantageously provided as computer programs.

The method is based on using the first antenna panel 110a and the second antenna panel 110b to detect a signal communicated by the backscattering device 120. This is accomplished by transmitting a signal (below denoted first signal) from the first antenna panel 110a and using spatial filter coefficients that causes only the signal (below denoted backscattered signal component) as backscattered by the backscattering device 120 to be detected by the second antenna panel 110b, or at least such that the non-backscattered part of the signal transmitted from the first antenna panel 110a does not exceed the background noise level when received at the second antenna panel 110b. Otherwise the first signal will act as interference at the second antenna panel 110b.

S102: First spatial filter coefficients are selected for the first antenna panel 110a with an object to minimize interference from the first antenna panel 110a towards the second antenna panel 110b over the radio propagation channel $G_{AB}$, $G_{BA}$.

Interference here thus also includes the signal as transmitted by the first antenna panel 110a and received at the second antenna panel 110b without being backscattered by the backscattering device 120.

S106: A first signal is transmitted from the first antenna panel 110a whilst the selected first spatial filter coefficients are applied.

S108: A backscattered signal component of the first signal as backscattered by the backscattering device 120 is received at the second antenna panel 110b. The backscattered signal component comprises the signal communicated by the backscattering device 120. In other words, the backscattered signal component thus defines the signal communicated by the backscattering device 120. The signal communicated by the backscattering device 120 is thereby detected by the MIMO reader 200.

Embodiments relating to further details of detecting a signal communicated by a backscattering device 120 as performed by the MIMO reader 200 will now be disclosed.

Aspects of the backscattering device 120 will, be disclosed next.

As disclosed above, the backscattering device 120 might change the phase of the first signal when it is backscattered. Hence, in some embodiments, the backscattered signal component has a phase difference in relation to the first signal. The phase difference might thus be caused by the first signal having been backscattered by the backscattering device 120, and the phase difference represents data of the backscattering device 120. The backscattering device 120 might thus convey an information sequence towards the second antenna panel 110b (and thus towards the MIMO reader 200) by selectively apply a phase differences across multiple backscattered signals. As an illustrative example, the sequence: phase shift, no phase shift, phase shift, phase shift, no phase shift, phase shift, ..., could corresponds to the information sequence "101101 ...". Steps S102, S106, S108 (as well as below disclosed optional step S104) might thus be repeatedly performed whilst a reflection coefficient (below denoted $\gamma$) that defines the phase shift is, according to a pattern, changed from one repetition to the next so as to convey an information sequence from the backscattering device 120 to the second antenna panel 110b. This pattern may be pre-determined, or depend on information to be communicated from the backscattering device 120.

Aspects of how the first spatial filter coefficients might be selected as in S102 will now be disclosed.

In some aspects the first signal is in the nullspace of radio propagation channel $G_{AB}$, $G_{BA}$. That is, the radio propagation channel $G_{AB}$, $G_{BA}$ generally has a nullspace, and the first spatial filter coefficients might be selected so that the first signal is in the nullspace. In this respect, the first signal might not need to be exactly in the nullspace; it might be sufficient that the first spatial filter coefficients are selected so that the first signal is in the nullspace with respect to some tolerance margin and/or that the first signal does not exceed the background noise level when received at the second antenna panel 110b over the radio propagation channel $G_{AB}$.

In some aspects the first signal is transmitted using beamforming. The first spatial filter coefficients might then define a first spatial beam pattern. The first spatial beam pattern might correspond to a set of orthogonal pencil beams aligned with the nullspace of the radio propagation channel $G_{AB}$. In this respect, the pencil beams might not need to be perfectly orthogonal with respect to each other; it might be sufficient that the pencil beams are orthogonal with respect to some tolerance margin. Hence, the first spatial filter coefficients might define a precoder composed of orthogonal pencil beams which are well aligned with the nullspace of the radio propagation channel $G_{AB}$. This reduces the possibility that the first signal is detected at the second antenna panel 110b.

Further in this respect, the radio propagation channel $G_{AB}$ might have a dominant subspace, and the first spatial filter coefficients might be selected so that the first signal is orthogonal to the dominant subspace. In this respect, the first signal might not need to be perfectly orthogonal to the dominant subspace; it might be sufficient that the first spatial filter coefficients are selected so that the first signal is orthogonal with respect to some tolerance margin to the dominant subspace and/or that the first signal does not exceed the background noise level when received at the second antenna panel 110b over the radio propagation channel $G_{AB}$. The first signal might thus be orthogonal to the dominant subspace of the radio propagation channel $G_{AB}$. This reduces the possibility that the first signal causes interference at the second antenna panel 110b.

In some aspects the first spatial filter coefficients are selected based on a channel estimate. Particularly, the first spatial filter coefficients might be selected based on an estimate of the radio propagation channel $G_{AB}$, $G_{BA}$. The dominant subspace might then be determined based on the estimate. Particularly, the dominant subspace might be determined as a function of a singular value decomposition of the estimate of the radio propagation channel $G_{AB}$, $G_{BA}$.

Aspects of how the radio propagation channel $G_{AB}$, $G_{BA}$ might be estimated will now be disclosed.

In some aspects, the estimate of the radio propagation channel $G_{AB}$, $G_{BA}$ is obtained by transmission and reception of pilot signals. In particular, in some embodiments:

S102a: A first pilots signal is transmitted from one of the first antenna panel 110a and the second antenna panel 110b.

S102b: The first signal is received at the other of the first antenna panel 110a and the second antenna panel 110b.

S102c: The radio propagation channel $G_{AB}$, $G_{BA}$ is estimated from the first pilot signal as received at the other of the first antenna panel 110a and the second antenna panel 110b.

That is, if the first pilots signal is transmitted from the first antenna panel 110a, the first signal is received at the second antenna panel 110b, and vice versa.

In some aspects, reciprocity is used to obtain the estimate of the radio propagation channel $G_{AB}$. When the first pilot signal is transmitted from the second antenna panel 110b and received at the first antenna panel 110a, the first spatial filter coefficients might be selected based on applying a reciprocity factor to the estimate of the radio propagation channel $G_{BA}$. Applying the reciprocity factor to the estimate of the radio propagation channel $G_{BA}$ yields a dominant subspace of the radio propagation channel $G_{AB}$. The first spatial filter coefficients might then be selected so that the first signal is orthogonal to the dominant subspace. In further detail, The radio propagation channel $G_{BA}$ is what is measured from the second antenna panel 110b to the first antenna panel 110a, and then a reciprocity factor is applied to obtain an estimate of the radio propagation channel $G_{AB}$ (i.e., the radio propagation channel from the first antenna panel 110a to the second antenna panel 110b). The estimate of the radio propagation channel $G_{AB}$ is then used for computing the nullspace (or dominant subspace) of the radio propagation channel $G_{AB}$.

The same procedure is applicable when the first pilot signal is transmitted from the first antenna panel 110a and received at the second antenna panel 110b but does then not require reciprocity. In this respect, when the first pilot signal is transmitted from the first antenna panel 110a and received at the second antenna panel 110b, the first spatial filter coefficients are obtained from information of the radio propagation channel $G_{AB}$ as estimated at the second antenna panel 110b. The information might be the estimated dominant subspace of the radio propagation channel $G_{AB}$.

In some aspects, a beam-sweep is made at the first antenna panel 110a and the second antenna panel 110b. In particular, the first pilot signal might be transmitted in a first set of transmit beams and the first pilot signal might be received in a second set of receive beams. That is, if the first pilots signal is transmitted from the first antenna panel 110a and the first signal is received at the second antenna panel 110b, then the first set of transmit beams are applied at the first antenna panel 110a and the second set of receive beams are applied at the second antenna panel 110b, vice versa. The radio propagation channel might then be estimated for each beam combination of transmit beam and receive beam. The first spatial filter coefficients might then be selected based on the beam combination yielding highest gain of the radio propagation channel. In this respect, the beam combination yielding highest gain of the radio propagation channel $G_{AB}$, $G_{BA}$ defines a dominant subspace of the radio propagation channel $G_{AB}$, $G_{BA}$, and the first spatial filter coefficients might then be selected so that the first signal is orthogonal to the dominant subspace. Thereby, the strongest beams (with respect to transmission from the first antenna panel 110a to the second antenna panel 110b) can be found and then these beams can be explicitly avoided when the first signal is to be transmitted as in S106.

In some aspect the first spatial filter coefficients are iteratively determined.

In some aspects, second spatial filter coefficients are applied at the second antenna panel 110b. A similar procedure as how to select the first spatial filter coefficients can then be used to select the second spatial filter coefficients. In particular, in some embodiments:

S104: Second spatial filter coefficients are selected for the second antenna panel 110b with an object to minimize interference from the first antenna panel 110a towards the second antenna panel 110b over the radio propagation channel $G_{AB}$, $G_{BA}$. The backscattered signal component is received at the second antenna panel 110b whilst the selected second spatial filter coefficients are applied at the second antenna panel 110b.

The second spatial filter coefficients might further be selected based on the first spatial filter coefficients. In this way the second spatial filter coefficients can be selected so that the equivalent channel defined by the first spatial filter coefficients, the radio propagation channel $G_{AB}$ and the second spatial filter coefficients yield low direct link interference.

As for the first spatial filter coefficients, the second spatial filter coefficients might define a second spatial beam pattern. A similar procedure as how to define the first spatial beam pattern as disclosed above can then be used to define the second spatial beam pattern.

Three different examples for how the radio propagation channel $G_{AB}$ can be estimated and how a signal communicated by the backscattering device 120 can be detected will be disclosed next.

Details of the first example will be disclosed next.

In this example, pilot signals are transmitted only from the second antenna panel 110b. The first spatial filter coefficients of the first antenna panel 110a are then selected based on the radio propagation channel $G_{BA}$ as learned from the pilot signals received at the first antenna panel 110a. Hence, this example assumes reciprocity-based operation, which can be obtained in practice via reciprocity calibration techniques. Further details of this example will now be disclosed.

Pilot signals, defined by a matrix $\Phi$ of dimension $N \times \tau$, where $\tau$ is the number of time/frequency resources of the pilot signal, are transmitted from the second antenna panel 110b. Typically, this matrix may be proportional to unitary:

$$\Phi \Phi^H \propto I$$

This achieves omnidirectional transmission, effectively, but the matrix could also be optimized in order to favor some specific direction that in turn may be determined from knowledge of, e.g. long-term statistics, of the radio propagation environment.

The signal received at the first antenna panel 110a is denoted $X$ is of dimension $M \times \tau$ and can be expressed as:

$$X = G_{BA}\Phi + W$$

where $W$ is noise. Based on $X$, the radio propagation channel $G_{BA}$ can be estimated, for example, the least-squares estimate of $G_{BA}$ can be found as:

$$\widehat{G_{BA}} = X\Phi^H\left(\Phi\Phi^H\right)^{-1}.$$

Also other estimates of the radio propagation channel $G_{BA}$ are possible, for example based on the minimum mean squared error (MMSE) estimate.

Accordingly, the signal path as backscattered at the backscattering device 120 is neglected (as it is likely to be very weak in comparison to the signal path on the radio propagation channel $G_{BA}$.

An integer $K$ (that may be pre-determined or adaptively chosen) is selected and the $K$ dominant singular vectors of the radio propagation channel $G_{AB}$ are determined. Specifically, consider the singular value decomposition of $\widehat{G_{AB}} = \widehat{G_{BA}^T}$:

$$\widehat{G_{AB}} = U\Delta V^H$$

where $U$ is unitary of dimension $N \times K_0$, where $V$ is unitary of dimension $M \times K_0$, where $\Delta$ is $K_0 \times K_0$ diagonal with positive diagonal elements ordered in decreasing order, and where $K_0$ is the smallest of $M$ and $N$. Let $V_K$ be the first $K$ columns of $V$. The matrix $V_K$ contains the sought-after dominant $K$-dimensional subspace. This subspace is expected to slowly vary slowly with time since the channel is mostly static.

Alternatively, if $P$ channel estimates have been obtained in the near-past, say:

$$\left\{\widehat{G_{AB}^{(p)}}\right\}_{p=1}^{P},$$

the sought-after domain $K$-dimensional subspace might be determined via applying the same procedure as before to the covariance matrix estimate given by:

$$\hat{C} = \sum_p \widehat{G_{AB}^{(p)}}^H \widehat{G_{AB}^{(p)}}.$$

A probing signal $\Psi$ of dimension $M \times T$ (above denoted first signal) is then transmitted at the first antenna panel 110a aimed at the discovery of the backscattering device 120, with the second antenna panel 110b as receiver (where the thus received signal above is denoted backscattered signal component after backscattering at the backscattering device 120). The probing signal $\Psi$ may be selected based on prior knowledge of the propagation environment or its statistics, but can also be designed for, nominally, omnidirectional transmission. For the latter, the probing signal might be represented by a matrix $\Psi$ (of time/frequency resources) such that $\Psi\Psi^H \propto I$.

The probing signal $\Psi$ might be projected (mostly) onto the nullspace of the dominant channel directions associated with the direct link A-B from the first antenna panel 110a to the second antenna panel 110b, in order to minimize the interference at the second first antenna panel 110b caused by this direct link A-B. This in turn will improve the detection at the second first antenna panel 110b of signals backscattered at the backscattering device 120.

For example, the probing signal might be transmitted according to:

$$(I - V_K V_K^H)\Psi$$

where $(I - V_K V_K^H)$ is the orthogonal projection onto the orthogonal complement of $V_K$. The projector is of dimension $M \times M$ and has rank $M - K$.

The transmission from the first antenna panel 110a is thus received at the second antenna panel 110b; both on one of a few paths that may have propagated over the channel $\boldsymbol{G}_{AB}$ (e.g. the line-of-sight path), and a part that has been backscattered at the backscattering device 120. Let $\gamma$ denote the reflection coefficient of the antenna at the backscattering device 120. The value of $\gamma$, and particularly its phase, can be changed by the backscattering device 120 by varying the impedance of the load connected to the antenna. Then the signal received at second antenna panel 110b (of dimension $N \times T$) can be written:

$$Y = \boldsymbol{G}_{AB}(I - V_K V_K^H)\Psi + \gamma g_{CB} g_{AC}\Psi + W'$$

where $W'$ is noise. It is noted that $g_{CB}$ has dimension $N \times 1$ and $g_{AC}$ has dimension $1 \times M$, so that the rank one matrix $g_{CB}g_{AC}$ is of size $N \times M$.) It then follows that:

$$\boldsymbol{G}_{AB}(I - V_K V_K^H) \approx \widehat{\boldsymbol{G}_{AB}}(I - V_K V_K^H) = U\Delta V^H(I - V_K V_K^H) \approx 0$$

Thus:

$$Y \approx \gamma g_{CB} g_{AC}\Psi + W'$$

In other words, the "interfering" direct link component from the first antenna panel 110a towards the second antenna panel 110b has been significantly reduced.

The value of $\gamma$ might then be varied over multiple time epochs/slots, such that the presence of a signal from the backscattering device 120 can be detected the second antenna panel 110b. For example, if the reflection coefficient is varied according to a known (and pre-determined) pattern $\{\gamma_1, ..., \gamma_L\}$ and the corresponding received blocks are $\{Y_1, ..., Y_L\}$ then the following quantity can be computed from the signal received at the second antenna panel 110b:

$$\sum_{l=1}^{L} || \gamma^*{}_l Y_l ||^2$$

This quantity can then be compared to a threshold. If the result exceeds the threshold, a signal from the backscattering device 120 is detected, otherwise not. Channel invariance is assumed during the $L$ epochs.

The pattern applied at the backscattering device 120 may have 1) good signal detection properties and 2) favorable implementation properties for impedance matching. One example are maximum-length pseudo-noise sequences which 1) have autocorrelation functions with a single peak and large peak-to-sidelobe ratio, and 2) can be implemented by alternating between two distinct phase shifts.

Details of the second example will be disclosed next.

This example is similar to the first example, except that pilot signals are repeatedly transmitted back-and-forward in an iterative fashion between the first antenna panel 110a and the second antenna panel 110b to learn the dominant modes of the radio propagation channel $G_{AB}$.

This example may render more efficient discovery of the sought-after dominant $K$-dimensional subspace defined above in the first example, especially in low-mobility environment where channel tracking is suitable.

The precoder weights at the first antenna panel 110a are adjusted in order to form a wide beam or close-to omni-directional beam. However, any setting of the weights at the first antenna panel 110a is possible, e.g., random setting of weights and/or weights set according to prior channel knowledge. Denote the weights at the first antenna panel 110a by the $M \times 1$ column vector $w_A$. Pilot signal defined by a matrix $\Phi$ of dimension $1 \times 1$; for simplicity assume $\phi = 1$, are transmitted from the first antenna panel 110a. Ignoring the contribution of noise, the signal as received at the second antenna panel 110b can be expressed as:

$$X_1^B = \alpha_1^a G_{BA} w_A$$

where $\alpha_1^a$ is a real-valued scaling factor ensuring that the transmit signal has unit energy for simplicity.

Taking the complex-conjugate of the received signals yields $X_1^{B^*}$. This can be used as precoding weights at the second antenna panel 110b when transmitting back to the first antenna panel 110a. With that, the received signal at the first antenna panel 110a equals:

$$X_1^A = \alpha_1^b G_{BA}^T (\alpha_1^a \, G_{BA} w_A)^*$$
$$= \alpha_1^b \alpha_1^a G_{BA}^T G_{BA}^* w_A^*$$

This defines one iteration.

Taking the complex-conjugate of the received signals yields $X_1^{A^*}$. This can be used as precoding weights at the first antenna panel 110a when transmitting back to the second antenna panel 110b. With that, the received signal at second antenna panel 110b equals:

$$X_2^B = \alpha_1^b \alpha_1^a \alpha_2^a G_{BA} G_{BA}^H G_{BA} w_A$$

The process continues until a convergence criterion is satisfied. With that, after $N$ iterations the signal as received at the first antenna panel 110a is:

$$X_N^A = \prod_{n=1}^{N} \left( \alpha_n^b \alpha_n^a G_{BA}^T G_{BA}^* \right) w_A^* \rightarrow V_1 V_1^H w_A^*.$$

This shows that for large values of $N$ the received signals at the first antenna panel 110a converge to a scaled version of the right dominant singular vector of $G_{BA}$. The same occurs at the second antenna panel 110b. That is, for large values of $N$ the received signals converge to a scaled version of the left dominant singular vector of $G_{BA}$. Thus, this technique can be used to learn the dominant singular vector of $G_{BA}$.

Modifications of this technique are possible within this example where, after learning the dominant singular vector, the antenna panel 110a, 110b can subtract their contribution from the transmitted signals, and effectively learn the second strongest singular vector of the channel. This way, the dominant $K$-dimensional subspace can be learned.

Details of the third example will be disclosed next.

This example is especially suitable for antenna panels 110a, 110b equipped with antennas and an RF architecture that implements a fixed grid of beams (possibly in analog hardware). This example does not assume any reciprocity-based operation.

Assume that antenna panels 110a, 110b are equipped with grid-of-beams beamformers, $F_A$ and $F_B$, respectively. These beamformers could be defined by DFT matrices. A full beam sweep is performed in the direction A-to-B, resulting in a matrix of measurements:

$$X = F_B^T G_{BA} F_A.$$

The pilot signals, and pilot post-processing equalization steps are not included in the equations here, but can be performed similarly as in the first example.

An evaluation is performed as to which beam pairs yield high channel gain or Received Signal Strength Indicator (RSSI) at the second antenna panel 110b by comparing the energy of the elements of $X$ to a predefined threshold. The elements that yield an energy larger than the threshold are associated with beam pairs that should not be used when the probing signal is transmitted at the first antenna panel 110a and received at the second antenna panel 110b, as described above in the first example. For example, if the energy of the element in the $3^{rd}$ row and $5^{th}$ column of the matrix $X$ is higher than a threshold, then the beam at the first antenna panel 110a associated with the $5^{th}$ column of $F_A$ and the beam at the second antenna panel 110b associated with the $3^{rd}$ column of $F_B$ should not be used simultaneously when the probing signal is transmitted at the first antenna panel 110a and received at the second antenna panel 110b.

The matrix $X$, or a simpler version of it comprising information about which beam pairs, may be used for the probing signal transmission (e.g. indexes of beams associated with low RSSI), may be readily available at the first antenna panel 110a or sent back to the first antenna panel 110a via an over-the-air control channel or a backhaul/fronthaul channel. The former might be the case where the first antenna panel 110a and the second antenna panel 110b are interconnected, or at least controlled, by common processing circuitry 210 of the MIMO reader 200. Alternatively, a beam sweep may be done in the reverse direction so that the first antenna panel 110a learns the relevant information of matrix $X$. This does not require full channel reciprocity (i.e. per-subcarrier amplitude and phase reciprocity) but only requires that the energy measured over the entire bandwidth of a beam pair is similar regardless of the direction of the measurement.

A probing signal (above denoted first signal) is then transmitted at the first antenna panel 110a aimed at the discovery of the backscattering device 120, with second antenna panel 110b as receiver (where the thus received signal above is denoted backscattered signal component after backscattering at the backscattering device 120). To this end, a new beam sweep procedure is performed where only the beams that were identified to yield low RSSI are used. At one end of the link, each of the beams swept may be associated with one of more combinations of the beams that are associated with low RSSI values in the matrix $X$.

For each beam pair that is scanned, an evaluation is performed of the signal (above denoted backscattered signal component) as received at the second antenna panel 110b in a similar way as in the first example. Thus, the evaluation aims at determining whether or not the pattern used at the backscattering device 120 is present in the received signals, for each beam that is being scanned. If no detection can be made, another beam pair can be tested at the first antenna panel 110a and the second antenna panel 110b. If a detection that the pattern is present in the received signals can be made, the scanning stops, and the current beam pair may be used for subsequent interactions with the backscattering device 120.

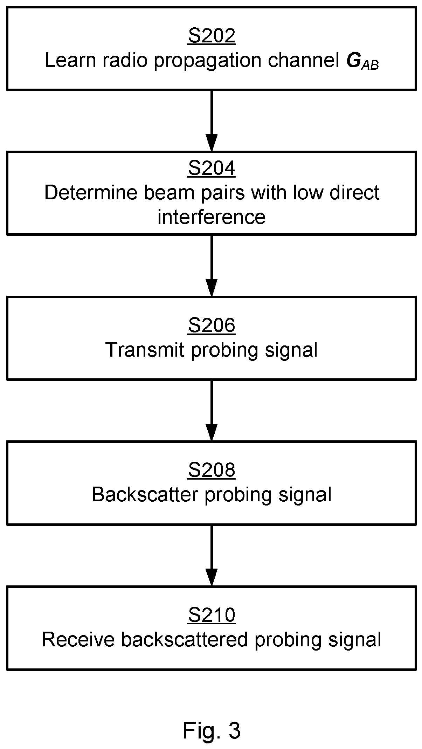

One particular embodiment for detecting a signal communicated by a backscattering device 120 as performed by the MIMO reader 200 will now be disclosed with reference to the flowchart of **Fig. 3.**

S202: The radio propagation channel $G_{AB}$ from the first antenna panel 110a to the second antenna panel 110b is learned according to any of the aspects, embodiments, or examples disclosed above.

S204: Beam pairs with low direct interference (i.e., interference on the radio propagation channel $G_{AB}$) are determined. One way to perform this step is to select for the first antenna panel 110a, first spatial filter coefficients with an object to minimize interference from the first antenna panel 110a towards the second antenna panel 110b over the radio propagation channel $G_{AB}$.

S206: A probing signal (above denoted first signal) is then transmitted at the first antenna panel 110a aimed at discovery of the backscattering device 120 or for obtaining data from the backscattering device 120, with the second antenna panel 110b as receiver.

S208: The backscattering device 120 backscatters the probing signal according to the reflection coefficient $\gamma$.

S210: A signal (above denoted backscattered signal component), where the backscattered signal component is the probing signal as backscattered by the backscattering device 120 is received at the second antenna panel 110b.

Steps 206, S208, S210 might be repeatedly performed whilst the reflection coefficient $\gamma$ is, according to a pattern, changed from one repetition to the next so as to convey an information sequence from the backscattering device 120 to the second antenna panel 110b. This pattern may be pre-determined, or depend on information to be communicated from the backscattering device 120.

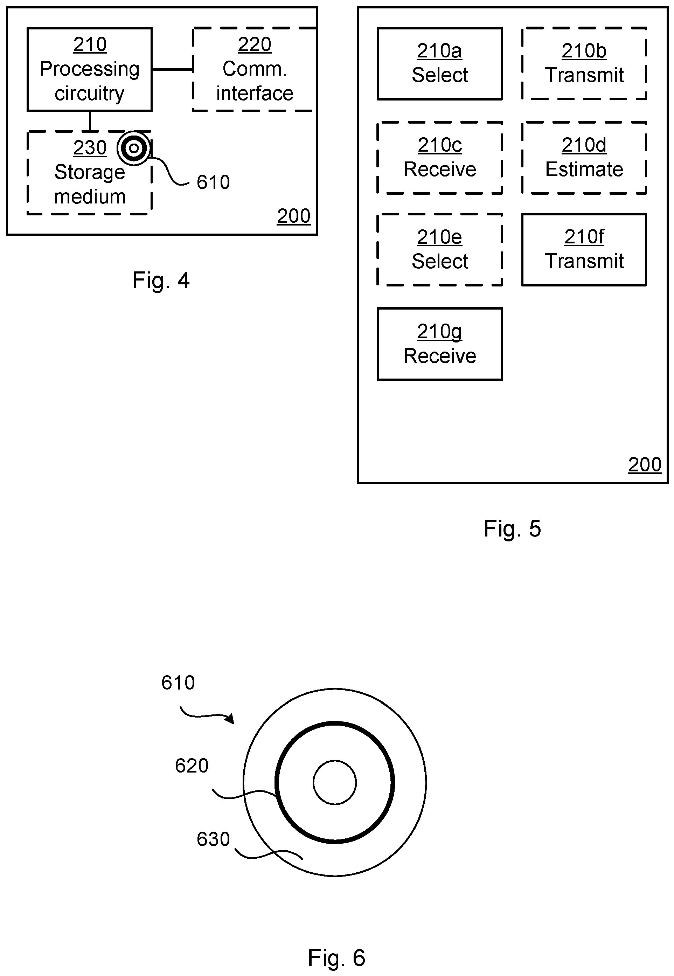

**Fig. 4** schematically illustrates, in terms of a number of functional units, the components of a MIMO reader 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 610 (as in Fig. 6), e.g. in the form of a storage medium 230. The processing circuitry 210 may further be provided as at least one application specific integrated circuit (ASIC), or field programmable gate array (FPGA).

Particularly, the processing circuitry 210 is configured to cause the MIMO reader 200 to perform a set of operations, or steps, as disclosed above. For example, the storage medium 230 may store the set of operations, and the processing circuitry 210 may be configured to retrieve the set of operations from the storage medium 230 to cause the MIMO reader 200 to perform the set of operations. The set of operations may be provided as a set of executable instructions.

Thus the processing circuitry 210 is thereby arranged to execute methods as herein disclosed. The storage medium 230 may also comprise persistent storage, which, for example, can be any single one or combination of magnetic memory, optical memory, solid state memory or even remotely mounted memory. The MIMO reader 200 may further comprise a communications interface 220 at least configured for communications with other entities, functions, nodes, and devices. As such the communications interface 220 may comprise one or more transmitters and receivers, comprising analogue and digital components. Particularly, the first antenna panel 110a and the second antenna panel 110b might be part of the communications interface 220. The processing circuitry 210 controls the general operation of the MIMO reader 200 e.g. by sending data and control signals to the communications interface 220 and the storage medium 230, by receiving data and reports from the communications interface 220, and by retrieving data and instructions from the storage medium 230. Other components, as well as the related functionality, of the MIMO reader 200 are omitted in order not to obscure the concepts presented herein.

**Fig. 5** schematically illustrates, in terms of a number of functional modules, the components of a MIMO reader 200 according to an embodiment. The MIMO reader 200 of Fig. 5 comprises a number of functional modules; a select module 210a configured to perform step S102, a transmit module 210f configured to perform step S106, and a receive module 210g configured to perform step S108. The MIMO reader 200 of Fig. 5 may further comprise a number of optional functional modules, such as any of a transmit module 210b configured to perform step S102a, a receive module 210c configured to perform step S102b, an estimate module 210d configured to perform step S 102c, and a select module 210e configured to perform step S104. In general terms, each functional module 210a:210g may in one embodiment be implemented only in hardware and in another embodiment with the help of software, i.e., the latter embodiment having computer program instructions stored on the storage medium 230 which when run on the processing circuitry makes the MIMO reader 200 perform the corresponding steps mentioned above in conjunction with Fig 5. It should also be mentioned that even though the modules correspond to parts of a computer program, they do not need to be separate modules therein, but the way in which they are implemented in software is dependent on the programming language used. Preferably, one or more or all functional modules 210a:210g may be implemented by the processing circuitry 210, possibly in cooperation with the communications interface 220 and/or the storage medium 230. The processing circuitry 210 may thus be configured to from the storage medium 230 fetch instructions as provided by a functional module 210a:210g and to execute these instructions, thereby performing any steps as disclosed herein.

The MIMO reader 200 may be provided as a standalone device or as a part of at least one further device. For example, the MIMO reader 200 may be provided in a node of the radio access network or in a node of the core network. Alternatively, functionality of the MIMO reader 200 may be distributed between at least two devices, or nodes. These at least two nodes, or devices, may either be part of the same network part (such as the radio access network or the core network) or may be spread between at least two such network parts. In general terms, instructions that are required to be performed in real time may be performed in a device, or node, operatively closer to the cell than instructions that are not required to be performed in real time.

Thus, a first portion of the instructions performed by the MIMO reader 200 may be executed in a first device, and a second portion of the of the instructions performed by the MIMO reader 200 may be executed in a second device; the herein disclosed embodiments are not limited to any particular number of devices on which the instructions performed by the MIMO reader 200 may be executed. Hence, the methods according to the herein disclosed embodiments are suitable to be performed by a MIMO reader 200 residing in a cloud computational environment. Therefore, although a single processing circuitry 210 is illustrated in Fig. 4 the processing circuitry 210 may be distributed among a plurality of devices, or nodes. The same applies to the functional modules 210a:210g of Fig. 5 and the computer program 620 of Fig. 6.

**Fig. 6** shows one example of a computer program product 610 comprising computer readable storage medium 630. On this computer readable storage medium 630, a computer program 620 can be stored, which computer program 620 can cause the processing circuitry 210 and thereto operatively coupled entities and devices, such as the communications interface 220 and the storage medium 230, to execute methods according to embodiments described herein. The computer program 620 and/or computer program product 610 may thus provide means for performing any steps as herein disclosed.

In the example of Fig. 6, the computer program product 610 is illustrated as an optical disc, such as a CD (compact disc) or a DVD (digital versatile disc) or a Blu-Ray disc. The computer program product 610 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 620 is here schematically shown as a track on the depicted optical disk, the computer program 620 can be stored in any way which is suitable for the computer program product 610.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

**Claims**

1. A method for detecting a signal communicated by a backscattering device (120), the method being performed by a MIMO reader (200) comprising a first antenna panel (110a) and a second antenna panel (110b), the method comprising:

   selecting (S102), for the first antenna panel (110a), first spatial filter coefficients with an object to minimize interference from the first antenna panel (110a) towards the second antenna panel (110b) over a radio propagation channel ($G_{AB}$, $G_{BA}$), wherein the first spatial filter coefficients define a first spatial beam pattern and wherein the radio propagation channel ($G_{AB}$, $G_{BA}$) has a nullspace, and wherein the first spatial filter coefficients are selected so that the first signal is in the nullspace and wherein the first spatial beam pattern corresponds to a set of orthogonal pencil beams aligned with the nullspace of the radio propagation channel ($G_{AB}$, $G_{BA}$);
   transmitting (S106), from the first antenna panel (110a) and whilst applying the selected first spatial filter coefficients, a first signal; and
   receiving (S108), at the second antenna panel (110b), a backscattered signal component of the first signal as backscattered by the backscattering device (120), wherein the backscattered signal component comprises the signal communicated by the backscattering device (120), the MIMO reader (200) thereby detecting the signal communicated by the backscattering device (120).

2. The method according to claim 1, wherein the backscattered signal component has a phase difference in relation to the first signal.

3. The method according to claim 2, wherein the phase difference is caused by the first signal having been backscattered by the backscattering device (120), and wherein the phase difference represents data of the backscattering device (120).

4. The method according to claim 1, wherein the radio propagation channel ($G_{AB}$, $G_{BA}$) has a dominant subspace, and wherein the first spatial filter coefficients are selected so that the first signal is orthogonal to the dominant subspace.

5. The method according to a combination of claim 4, wherein the dominant subspace is determined as a function of a singular value decomposition of the estimate of the radio propagation channel ($G_{AB}$, $G_{BA}$).

6. The method according to claim 5, wherein the estimate of the radio propagation channel ($G_{AB}$, $G_{BA}$) is obtained by:

   transmitting (S102a), from one of the first antenna panel (110a) and the second antenna panel (110b), a first pilot signal;
   receiving (S102b), at the other of the first antenna panel (110a) and the second antenna panel (110b), the first pilot signal; and
   estimating (S102c) the radio propagation channel ($G_{AB}$, $G_{BA}$) from the first pilot signal as received at said other of the first antenna panel (110a) and the second antenna panel (110b).

7. The method according to claim 6, wherein, when the first pilot signal is transmitted from the second antenna panel (110b) and received at the first antenna panel (110a), the first spatial filter coefficients are selected based on applying a reciprocity factor to the estimate of the radio propagation channel ($G_{BA}$).

8. The method according to claim 7, wherein applying the reciprocity factor to the estimate of the radio propagation channel ($G_{BA}$) yields a dominant subspace of the radio propagation channel ($G_{AB}$), and wherein the first spatial filter coefficients are selected so that the first signal is orthogonal to the dominant subspace.

9. The method according to claim 6, wherein, when the first pilot signal is transmitted from the first antenna panel (110a) and received at the second antenna panel (110b), the first spatial filter coefficients are obtained from information of the radio propagation channel ($G_{AB}$) as estimated at the second antenna panel (110b).

10. The method according to claim 6, wherein the first pilot signal is transmitted in a first set of transmit beams and the first pilot signal is received in a second set of receive beams, wherein the radio propagation channel is estimated for each beam combination of transmit beam and receive beam, and wherein the first spatial filter coefficients are selected based on the beam combinations yielding highest gain of the radio propagation channel.

11. The method according to claim 10, wherein the beam combinations yielding highest gain of the radio propagation channel ($G_{AB}$, $G_{BA}$) defines a dominant subspace of the radio propagation channel ($G_{AB}$, $G_{BA}$), and wherein the first spatial filter coefficients are selected so that the first signal is orthogonal to the dominant subspace.

12. The method according to claim 6, wherein the first spatial filter coefficients are iteratively determined.

13. A MIMO reader (200) for detecting a signal communicated by a backscattering device (120), the MIMO reader (200) comprising a first antenna panel (110a) and a second antenna panel (110b), the MIMO reader (200) further comprising processing circuitry (210), the processing circuitry being configured to cause the MIMO reader (200) to:

> select, for the first antenna panel (110a), first spatial filter coefficients with an object to minimize interference from the first antenna panel (110a) towards the second antenna panel (110b) over a radio propagation channel ($G_{AB}$, $G_{BA}$), wherein the first spatial filter coefficients define a first spatial beam pattern and wherein the radio propagation channel ($G_{AB}$, $G_{BA}$) has a nullspace, and wherein the first spatial filter coefficients are selected so that the first signal is in the nullspace and wherein the first spatial beam pattern corresponds to a set of orthogonal pencil beams aligned with the nullspace of the radio propagation channel ($G_{AB}$, $G_{BA}$);
> transmit, from the first antenna panel (110a) and whilst applying the selected first spatial filter coefficients, a first signal; and
> receive, at the second antenna panel (110b), a backscattered signal component of the first signal as backscattered by the backscattering device (120), wherein the backscattered signal component comprises the signal communicated by the backscattering device (120), the MIMO reader (200) thereby detecting the signal communicated by the backscattering device (120).

14. A computer program (620) for detecting a signal communicated by a backscattering device (120), the computer program comprising computer code which, when run on processing circuitry (210) of a MIMO reader (200) comprising a first antenna panel (110a) and a second antenna panel (110b), causes the MIMO reader (200) to:

> select (S102), for the first antenna panel (110a), first spatial filter coefficients with an object to minimize interference from the first antenna panel (110a) towards the second antenna panel (110b) over a radio propagation channel ($G_{AB}$, $G_{BA}$), wherein the first spatial filter coefficients define a first spatial beam pattern and wherein the radio propagation channel ($G_{AB}$, $G_{BA}$) has a nullspace, and wherein the first spatial filter coefficients are selected so that the first signal is in the nullspace and wherein the first spatial beam pattern corresponds to a set of orthogonal pencil beams aligned with the nullspace of the radio propagation channel ($G_{AB}$, $G_{BA}$);
> transmit (S106), from the first antenna panel (110a) and whilst applying the selected first spatial filter coefficients, a first signal; and
> receive (S108), at the second antenna panel (110b), a backscattered signal component of the first signal as backscattered by the backscattering device (120), wherein the backscattered signal component comprises the signal communicated by the backscattering device (120), the MIMO reader (200) thereby detecting the signal communicated by the backscattering device (120).

**Patentansprüche**

1. Verfahren zum Erfassen eines von einer Rückstreuvorrichtung (120) ausgesendeten Signals, wobei das Verfahren von einem MIMO-Lesegerät (200) mit einem ersten Antennenpanel (110a) und einem zweiten Antennenpanel (110b) durchgeführt wird, wobei das Verfahren Folgendes umfasst:

> Auswählen (S102), für das erste Antennenpanel (110a), erster räumlicher Filterkoeffizienten, mit dem Ziel, Interferenz vom ersten Antennenpanel (110a) zum zweiten Antennenpanel (110b) über einen Funkausbreitungskanal ($G_{AB}$, $G_{BA}$) zu minimieren, wobei die ersten räumlichen Filterkoeffizienten ein erstes räumliches Strahlungsmuster definieren und wobei der Funkausbreitungskanal ($G_{AB}$, $G_{BA}$) einen Nullraum aufweist und wobei die ersten räumlichen Filterkoeffizienten so gewählt werden, dass sich das erste Signal im Nullraum befindet, und wobei das erste räumliche Strahlungsmuster einer Menge orthogonaler, mit dem Nullraum des Funkausbreitungskanals ($G_{AB}$, $G_{BA}$) ausgerichteter Schmalbündel entspricht;
> Senden (S106), vom ersten Antennenpanel (110a) und unter Anwendung der ausgewählten ersten räumlichen Filterkoeffizienten, eines ersten Signals und
> Empfangen (S108), am zweiten Antennenpanel (110b), einer rückgestreuten Signalkomponente des ersten Signals, die von der Rückstreuvorrichtung (120) rückgestreut wurde, wobei die rückgestreute Signalkomponente das von der Rückstreuvorrichtung (120) übermittelte Signal umfasst, wodurch das MIMO-Lesegerät (200) das von der Rückstreuvorrichtung (120) übermittelte Signal erfasst.

2. Verfahren nach Anspruch 1, wobei die rückgestreute Signalkomponente eine Phasendifferenz in Bezug auf das erste Signal aufweist.

3. Verfahren nach Anspruch 2, wobei die Phasendifferenz dadurch verursacht wird, dass das erste Signal von der Rückstreuvorrichtung (120) rückgestreut worden ist, und wobei die Phasendifferenz Daten der Rückstreuvorrichtung (120) darstellt.

4. Verfahren nach Anspruch 1, wobei der Funkausbreitungskanal ($G_{AB}$, $G_{BA}$) einen dominanten Unterraum aufweist und wobei die ersten räumlichen Filterkoeffizienten so ausgewählt werden, dass das erste Signal orthogonal zum dominanten Unterraum ist.

5. Verfahren nach einer Kombination von Anspruch 4, wobei der dominante Unterraum in Abhängigkeit von einer Singulärwertzerlegung der Schätzung des Funkausbreitungskanals ($G_{AB}$, $G_{BA}$) bestimmt wird.

6. Verfahren nach Anspruch 5, wobei die Schätzung des Funkausbreitungskanals ($G_{AB}$, $G_{BA}$) durch Folgendes erhalten wird:

Senden (S102a), von einem von dem ersten Antennenpanel (110a) und dem zweiten Antennenpanel (110b), eines ersten Pilotsignals;
Empfangen (S102b), an dem anderen von dem ersten Antennenpanel (110a) und dem zweiten Antennenpanel (110b), des ersten Pilotsignals und
Schätzen (S102c) des Funkausbreitungskanals ($G_{AB}$, $G_{BA}$) aus dem ersten Pilotsignal, wie es an dem anderen von dem ersten Antennenpanel (110a) und dem zweiten Antennenpanel (110b) empfangen wird.

7. Verfahren nach Anspruch 6, wobei, wenn das erste Pilotsignal von dem zweiten Antennenpanel (110b) gesendet und an dem ersten Antennenpanel (110a) empfangen wird, die ersten räumlichen Filterkoeffizienten auf Grundlage des Anwendens eines Reziprozitätsfaktors auf die Schätzung des Funkausbreitungskanals ($G_{BA}$) ausgewählt werden.

8. Verfahren nach Anspruch 7, wobei das Anwenden des Reziprozitätsfaktors auf die Schätzung des Funkausbreitungskanals ($G_{BA}$) einen dominanten Unterraum des Funkausbreitungskanals ($G_{AB}$) ergibt und wobei die ersten räumlichen Filterkoeffizienten so ausgewählt werden, dass das erste Signal orthogonal zum dominanten Unterraum ist.

9. Verfahren nach Anspruch 6, wobei, wenn das erste Pilotsignal von dem ersten Antennenpanel (110a) gesendet und von dem zweiten Antennenpanel (110b) empfangen wird, die ersten räumlichen Filterkoeffizienten aus Informationen über den Funkausbreitungskanal ($G_{AB}$) erhalten werden, wie sie an dem zweiten Antennenpanel (110b) geschätzt werden.

10. Verfahren nach Anspruch 6, wobei das erste Pilotsignal in einem ersten Satz von Sendestrahlen gesendet wird und das erste Pilotsignal in einem zweiten Satz von Empfangsstrahlen empfangen wird, wobei der Funkausbreitungskanal für jede Strahlkombination aus Sendestrahl und Empfangsstrahl geschätzt wird und wobei die ersten räumlichen Filterkoeffizienten auf Grundlage der Strahlkombinationen ausgewählt werden, welche die höchste Verstärkung des Funkausbreitungskanals ergeben.

11. Verfahren nach Anspruch 10, wobei die Strahlkombinationen, welche die höchste Verstärkung des Funkausbreitungskanals ($G_{AB}$, $G_{BA}$) ergeben, einen dominanten Unterraum des Funkausbreitungskanals ($G_{AB}$, $G_{BA}$) definieren, und wobei die ersten räumlichen Filterkoeffizienten so ausgewählt werden, dass das erste Signal orthogonal zum dominanten Unterraum ist.

12. Verfahren nach Anspruch 6, wobei die ersten räumlichen Filterkoeffizienten iterativ bestimmt werden.

13. MIMO-Lesegerät (200) zum Erfassen eines von einer Rückstreuvorrichtung (120) gesendeten Signals, wobei das MIMO-Lesegerät (200) ein erstes Antennenpanel (110a) und ein zweites Antennenpanel (110b) umfasst, wobei das MIMO-Lesegerät (200) weiter eine Verarbeitungsschaltung (210) umfasst, wobei die Verarbeitungsschaltung so konfiguriert ist, dass sie das MIMO-Lesegerät (200) zu Folgendem veranlasst:

für das erste Antennenpanel (110a), erste räumliche Filterkoeffizienten auszuwählen, mit dem Ziel, Interferenz vom ersten Antennenpanel (110a) zum zweiten Antennenpanel (110b) über einen Funkausbreitungskanal ($G_{AB}$, $G_{BA}$) zu minimieren, wobei die ersten räumlichen Filterkoeffizienten ein erstes räumliches Strahlungsmuster definieren und wobei der Funkausbreitungskanal ($G_{AB}$, $G_{BA}$) einen Nullraum aufweist und wobei die ersten räumlichen Filterkoeffizienten so gewählt werden, dass sich das erste Signal im Nullraum befindet, und wobei das erste räumliche Strahlungsmuster einer Menge orthogonaler, mit dem Nullraum des Funkausbreitungskanals ($G_{AB}$, $G_{BA}$) ausgerichteter Schmalbündel entspricht;

vom ersten Antennenpanel (110a) und unter Anwendung der ausgewählten ersten räumlichen Filterkoeffizienten, ein erstes Signal zu senden; und,

am zweiten Antennenpanel (110b), eine rückgestreute Signalkomponente des ersten Signals zu empfangen, die von der Rückstreuvorrichtung (120) rückgestreut wurde, wobei die rückgestreute Signalkomponente das von der Rückstreuvorrichtung (120) übermittelte Signal umfasst, wodurch das MIMO-Lesegerät (200) das von der Rückstreuvorrichtung (120) übermittelte Signal erfasst.

14. Computerprogramm (620) zum Erfassen eines von einer Rückstreuvorrichtung (120) gesendeten Signals, wobei das Computerprogramm Computercode umfasst, der, wenn er auf der Verarbeitungsschaltung (210) eines MIMO-Lesegeräts (200) mit einem ersten Antennenpanel (110a) und einem zweiten Antennenpanel (110b) ausgeführt wird, das MIMO-Lesegerät (200) zu Folgendem veranlasst:

für das erste Antennenpanel (110a), erste räumliche Filterkoeffizienten auszuwählen (S102), mit dem Ziel, Interferenz vom ersten Antennenpanel (110a) zum zweiten Antennenpanel (110b) über einen Funkausbreitungskanal ($G_{AB}$, $G_{BA}$) zu minimieren, wobei die ersten räumlichen Filterkoeffizienten ein erstes räumliches Strahlungsmuster definieren und wobei der Funkausbreitungskanal ($G_{AB}$, $G_{BA}$) einen Nullraum aufweist und wobei die ersten räumlichen Filterkoeffizienten so gewählt werden, dass sich das erste Signal im Nullraum befindet, und wobei das erste räumliche Strahlungsmuster einer Menge orthogonaler, mit dem Nullraum des Funkausbreitungskanals ($G_{AB}$, $G_{BA}$) ausgerichteter Schmalbündel entspricht;

vom ersten Antennenpanel (110a) und unter Anwendung der ausgewählten ersten räumlichen Filterkoeffizienten, ein erstes Signal zu senden (S106); und,

am zweiten Antennenpanel (110b) eine rückgestreute Signalkomponente des ersten Signals zu empfangen (S108), wie sie von der Rückstreuvorrichtung (120) rückgestreut wird, wobei die rückgestreute Signalkomponente das von der Rückstreuvorrichtung (120) übermittelte Signal umfasst, wodurch der MIMO-Leser (200) das von der Rückstreuvorrichtung (120) übermittelte Signal erfasst.

## Revendications

1. Procédé de détection d'un signal communiqué par un dispositif de rétrodiffusion (120), le procédé étant mis en œuvre par un lecteur MIMO (200) comprenant un premier panneau d'antenne (110a) et un second panneau d'antenne (110b), le procédé comprenant :

la sélection (S102), pour le premier panneau d'antenne (110a), de premiers coefficients de filtre spatial avec un objet afin de réduire au minimum les interférences du premier panneau d'antenne (110a) vers le second panneau d'antenne (110b) sur un canal de propagation radio ($G_{AB}$, $G_{BA}$), dans lequel les premiers coefficients de filtre spatial définissent un premier diagramme de rayonnement spatial et dans lequel le canal de propagation radio ($G_{AB}$, $G_{BA}$) présente un espace nul, et dans lequel les premiers coefficients de filtre spatial sont sélectionnés de sorte que le premier signal se situe dans l'espace nul et dans lequel le premier diagramme de rayonnement spatial correspond à un ensemble de faisceaux étroits orthogonaux alignés avec l'espace nul du canal de propagation radio ($G_{AB}$, $G_{BA}$) ;

la transmission (S106), depuis le premier panneau d'antenne (110a) et tout en appliquant les premiers coefficients de filtre spatial sélectionnés, d'un premier signal ; et

la réception (S108), au niveau du second panneau d'antenne (110b), d'une composante de signal rétrodiffusée du premier signal telle que rétrodiffusée par le dispositif de rétrodiffusion (120), dans lequel la composante de signal rétrodiffusée comprend le signal communiqué par le dispositif de rétrodiffusion (120), le lecteur MIMO (200) détectant ainsi le signal communiqué par le dispositif de rétrodiffusion (120).

2. Procédé selon la revendication 1, dans lequel la composante de signal rétrodiffusée présente une différence de phase par rapport au premier signal.

3. Procédé selon la revendication 2, dans lequel la différence de phase est causée par le premier signal ayant été rétrodiffusé par le dispositif de rétrodiffusion (120), et dans lequel la différence de phase représente les données du dispositif de rétrodiffusion (120).

4. Procédé selon la revendication 1, dans lequel le canal de propagation radio ($G_{AB}$, $G_{BA}$) présente un sous-espace dominant, et dans lequel les premiers coefficients de filtre spatial sont sélectionnés de sorte que le premier signal soit perpendiculaire au sous-espace dominant.

5. Procédé selon une combinaison de la revendication 4, dans lequel le sous-espace dominant est déterminé en fonction d'une décomposition en valeurs singulières de l'estimation du canal de propagation radio ($G_{AB}$, $G_{BA}$).

6. Procédé selon la revendication 5, dans lequel l'estimation du canal de propagation radio ($G_{AB}$, $G_{BA}$) est obtenue par :

la transmission (S102a), à partir de l'un du premier panneau d'antenne (110a) et du second panneau d'antenne (110b), d'un premier signal pilote ;
la réception (S102b), au niveau de l'autre du premier panneau d'antenne (110a) et du second panneau d'antenne (110b), du premier signal pilote ; et
l'estimation (S102c) du canal de propagation radio ($G_{AB}$, $G_{BA}$) à partir du premier signal pilote tel que reçu au niveau dudit autre du premier panneau d'antenne (110a) et du second panneau d'antenne (110b).

7. Procédé selon la revendication 6, dans lequel, lorsque le premier signal pilote est transmis par le second panneau d'antenne (110b) et reçu au niveau du premier panneau d'antenne (110a), les premiers coefficients de filtre spatial sont sélectionnés en appliquant un facteur de réciprocité à l'estimation du canal de propagation radio ($G_{BA}$).

8. Procédé selon la revendication 7, dans lequel l'application du facteur de réciprocité à l'estimation du canal de propagation radio ($G_{BA}$) donne un sous-espace dominant du canal de propagation radio ($G_{AB}$), et dans lequel les premiers coefficients de filtre spatial sont sélectionnés de sorte que le premier signal soit orthogonal au sous-espace dominant.

9. Procédé selon la revendication 6, dans lequel, lorsque le premier signal pilote est transmis par le premier panneau d'antenne (110a) et reçu au niveau du second panneau d'antenne (110b), les premiers coefficients de filtre spatial sont obtenus à partir d'informations du canal de propagation radio ($G_{AB}$) telles qu'estimées au niveau du second panneau d'antenne (110b).

10. Procédé selon la revendication 6, dans lequel le premier signal pilote est transmis dans un premier ensemble de faisceaux de transmission et le premier signal pilote est reçu dans un second ensemble de faisceaux de réception, dans lequel le canal de propagation radio est estimé pour chaque combinaison de faisceaux de faisceaux de transmission et de faisceaux de réception, et dans lequel les premiers coefficients de filtre spatial sont sélectionnés sur la base des combinaisons de faisceaux donnant le gain le plus élevé du canal de propagation radio.

11. Procédé selon la revendication 10, dans lequel les combinaisons de faisceaux donnant le gain le plus élevé du canal de propagation radio ($G_{AB}$, $G_{BA}$) définissent un sous-espace dominant du canal de propagation radio ($G_{AB}$, $G_{BA}$), et dans lequel les premiers coefficients de filtre spatial sont sélectionnés de sorte que le premier signal soit orthogonal au sous-espace dominant.

12. Procédé selon la revendication 6, dans lequel les premiers coefficients de filtre spatial sont déterminés de manière itérative.

13. Lecteur MIMO (200) destiné à détecter un signal communiqué par un dispositif de rétrodiffusion (120), le lecteur MIMO (200) comprenant un premier panneau d'antenne (110a) et un second panneau d'antenne (110b), le lecteur MIMO (200) comprenant en outre un ensemble de circuits de traitement (210), l'ensemble de circuits de traitement étant configuré pour amener le lecteur MIMO (200) à :

sélectionner, pour le premier panneau d'antenne (110a), des premiers coefficients de filtre spatial avec un objet afin de réduire au minimum les interférences du premier panneau d'antenne (110a) vers le second panneau d'antenne (110b) sur un canal de propagation radio ($G_{AB}$, $G_{BA}$), dans lequel les premiers coefficients de filtre spatial définissent un premier diagramme de rayonnement spatial et dans lequel le canal de propagation radio ($G_{AB}$, $G_{BA}$) présente un espace nul, et dans lequel les premiers coefficients de filtre spatial sont sélectionnés de sorte que le premier signal se situe dans l'espace nul et dans lequel le premier diagramme de rayonnement spatial correspond à un ensemble de faisceaux étroits orthogonaux alignés avec l'espace nul du canal de propagation radio ($G_{AB}$, $G_{BA}$) ;

transmettre, depuis le premier panneau d'antenne (110a) et tout en appliquant les premiers coefficients de filtre spatial sélectionnés, un premier signal ; et

recevoir, au niveau du second panneau d'antenne (110b), une composante de signal rétrodiffusée du premier signal telle que rétrodiffusée par le dispositif de rétrodiffusion (120), dans lequel la composante de signal rétrodiffusée comprend le signal communiqué par le dispositif de rétrodiffusion (120), le lecteur MIMO (200) détectant ainsi le signal communiqué par le dispositif de rétrodiffusion (120).

14. Programme informatique (620) destiné à détecter un signal communiqué par un dispositif de rétrodiffusion (120), le programme informatique comprenant un code informatique qui, lorsqu'il est exécuté sur l'ensemble de circuits de traitement (210) d'un lecteur MIMO (200) comprenant un premier panneau d'antenne (110a) et un second panneau d'antenne (110b), amène le lecteur MIMO (200) à :

sélectionner (S102), pour le premier panneau d'antenne (110a), des premiers coefficients de filtre spatial avec un objet afin de réduire au minimum les interférences du premier panneau d'antenne (110a) vers le second panneau d'antenne (110b) sur un canal de propagation radio ($\mathbf{G}_{AB}$, $\mathbf{G}_{BA}$), dans lequel les premiers coefficients de filtre spatial définissent un premier diagramme de rayonnement spatial et dans lequel le canal de propagation radio ($G_{AB}$, $G_{BA}$) présente un espace nul, et dans lequel les premiers coefficients de filtre spatial sont sélectionnés de sorte que le premier signal se situe dans l'espace nul et dans lequel le premier diagramme de rayonnement spatial correspond à un ensemble de faisceaux étroits orthogonaux alignés avec l'espace nul du canal de propagation radio ($G_{AB}$, $G_{BA}$) ;

transmettre (S106), depuis le premier panneau d'antenne (110a) et tout en appliquant les premiers coefficients de filtre spatial sélectionnés, un premier signal ; et

recevoir (S108), au niveau du second panneau d'antenne (110b), une composante de signal rétrodiffusée du premier signal telle que rétrodiffusée par le dispositif de rétrodiffusion (120), dans lequel la composante de signal rétrodiffusée comprend le signal communiqué par le dispositif de rétrodiffusion (120), le lecteur MIMO (200) détectant ainsi le signal communiqué par le dispositif de rétrodiffusion (120).

Fig. 1

## S102
Select first spatial filter coefficients

### S102a
Transmit first pilot signal

### S102b
Receive first pilot signal

### S102c
Estimate radio propagation channel

## S104
Select second spatial filter coefficients

## S106
Transmit first signal

## S108
Receive backscattered signal component

Fig. 2

Fig. 3

| | |
|---|---|
| **210** Processing circuitry | **220** Comm. interface |
| **230** Storage medium | 610 |

200

Fig. 4

| | |
|---|---|
| **210a** Select | **210b** Transmit |
| **210c** Receive | **210d** Estimate |
| **210e** Select | **210f** Transmit |
| **210g** Receive | |

200

Fig. 5

610

620

630

Fig. 6

**EP 4 360 222 B1**

**Patent documents cited in the description**

- EP 101013425 A
- US 20170286730 A1
- US 20190059099 A1
- US 20200343944 A1